(19) Europäisches Patentamt
European Patent Office
Office européen des brevets

(11) EP 2 384 357 B1

(12) **EUROPEAN PATENT SPECIFICATION**

(45) Date of publication and mention of the grant of the patent:
**14.02.2018 Bulletin 2018/07**

(21) Application number: **09796123.9**

(22) Date of filing: **30.12.2009**

(51) Int Cl.:
***C08L 95/00*** *(2006.01)*
***E04D 1/00*** *(2006.01)*
***C08K 5/01*** *(2006.01)*
***C08L 23/10*** *(2006.01)*
***C08L 25/10*** *(2006.01)*

(86) International application number:
**PCT/NL2009/050830**

(87) International publication number:
**WO 2010/077141 (08.07.2010 Gazette 2010/27)**

(54) **ASPHALT COMPOSITION**

ASPHALTZUSAMMENSETZUNG

COMPOSITION D'ASPHALTE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.01.2009 EP 09150057**

(43) Date of publication of application:
**09.11.2011 Bulletin 2011/45**

(73) Proprietor: **Rasenberg Infra B.V.**
**4815 PT Breda (NL)**

(72) Inventor: **MOLENBERG, Erik**
**NL-4815 HD Breda (NL)**

(74) Representative: **Nederlandsch Octrooibureau**
**P.O. Box 29720**
**2502 LS The Hague (NL)**

(56) References cited:
**EP-A1- 1 642 935**
**WO-A-2006/107179**
**WO-A-2008/084014**
**US-A- 4 549 834**

- **J. SHEN, S. AMIRKHANIAN, J.A. MILLER: "Effects of Rejuvenating Agents on Superpave Mixtures Containing Reclaimed Asphalt Pavement" JOURNAL OF MATERIALS IN CIVIL ENGINEERING, vol. 19, no. 5, 1 May 2007 (2007-05-01), pages 376-384, XP002531774**
- **RAMÓN ROMERA ET AL: "Rheological aspects of the rejuvenation of aged bitumen" RHEOLOGICA ACTA, SPRINGER-VERLAG, DE LNKD- DOI:10.1007/S00397-005-0078-7, vol. 45, no. 4, 17 March 2006 (2006-03-17) , pages 474-478, XP019426030 ISSN: 1435-1528**
- **SHEN ET AL: "Effects of rejuvenator on performance-based properties of rejuvenated asphalt binder and mixtures" CONSTRUCTION AND BUILDING MATERIALS, ELSEVIER LNKD-DOI:10.1016/J.CONBUILDMAT.2006.03.006, vol. 21, no. 5, 12 December 2006 (2006-12-12), pages 958-964, XP005801365 ISSN: 0950-0618**
- **CHEN J S ET AL: "Engineering characterization of recycled asphalt concrete and aged bitumen mixed recycling agent" JOURNAL OF MATERIALS SCIENCE, KLUWER ACADEMIC PUBLISHERS, BO LNKD-DOI:10.1007/S10853-007-1713-8, vol. 42, no. 23, 29 July 2007 (2007-07-29) , pages 9867-9876, XP019528840 ISSN: 1573-4803**
- **IMAD L. AL.QADI ET AL.: "Reclaimed Asphalt Pavement - A Literature Review" , [Online] March 2007 (2007-03), XP002580314 Illinois, USA ISSN: 0197-9191 Retrieved from the Internet: URL:http://www.morerap.us/RAP%20Resources/Literature%20Reviews/RAP%20Lit%20Review.pd f> [retrieved on 2010-04-29]**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 384 357 B1

## Description

### Field of the invention

The present invention relates to bituminous binder compositions and asphalt compositions, roofing coverings, bituminous membranes and bituminous fabrics comprising said bituminous binder compositions.

### Background of the invention

Employing combinations of virgin bitumen and recycled asphalt in asphalt compositions to reduce the amount of virgin bitumen in asphalt compositions is known in the art. Substitution of virgin bitumen is commonly done due to the sharp rise of costs of virgin bitumen and for environmental reasons. However, the application of recycled asphalt has disadvantageous properties since the bitumen contained therein is, mainly due to oxidative processes and to the evaporation of lighter components, less resistant to deformation, more brittle and less flexible (i.e., "hardening" of the bitumen) than virgin bitumen, which results in asphalt compositions having a moderate elastic behaviour.

The hardening of bitumen leads to an increase of stiffness at higher temperatures, an increase of brittleness at lower temperatures, and an increase of viscosity. A stiffness increase at higher temperatures may be beneficial since the asphalt containing the hardened bitumen is less vulnerable to deformation and can withstand higher loads. However, a brittleness increase is disadvantageous because it reduces the resistance to break at higher loads. Virgin bitumen has a better viscoelastic behaviour than hardened bitumen which enables self-repair of the asphalt layer in times of less traffic loads. Additionally, the viscosity increase has the disadvantage that the mixing and application temperatures of the asphalt composition (when the asphalt composition only comprises virgin bitumen, mixing is usually performed at about 170°C and application is usually performed at about 140°C) must be increased with about 50°C. This is obviously undesired. Consequently, to improve the viscosity properties, an additive is added to hardened bitumen to reduce the viscosity to a value that approaches the viscosity of virgin bitumen.

For example, US 5.217.530 discloses asphalt compositions comprising 3 - 8 parts by weight of virgin bitumen, 62 - 96 parts by weight of aggregate material and 0.5 - 30 parts by weight of recycled roof waste, said recycled roof waste being size-graded to a dimension of less than 1.0 mm and comprising about 5 - 15 wt.% of fibre and about 40 - 70 wt.% of filler. The recycled roof waste is used as the predominant source of bituminous binder. The virgin bitumen preferably has a penetration of 15 - 200, more preferably 20 - 50 $10^{-1}$ mm. The recycled roof waste is most preferably "recycled asphalt roofing waste" which is available from ReClaim Inc., Tampa, Florida.

US 5.340.391 discloses asphalt compositions comprising virgin bitumen, asbestos and recycled roof waste. However, such compositions are environmentally very unfriendly since they contain asbestos fibres which upon inhalation may causeserious illness, e.g. mesothelioma and asbestosis. The roof waste that is preferably used in the invention disclosed in US 5.340.391 is also "recycled asphalt roofing waste" which is available from ReClaim Inc., Tampa, Florida, and this material comprises about 5 - 15 wt.% of fibre, about 40 - 70 wt.% of filler and about 30 - 40 wt.% of hardened bitumen.

Asphalt compositions comprising recycled roof waste according to the prior art often provided a too brittle material as discussed above whereas highly elastic asphalt must often be used in road construction for areas of high traffic rates and high traffic loads. Hence, to enhance the elasticity of the asphalt composition comprising recycled bitumen, crumb rubber may be added as an additive. Reference is made to US 5.436.285, US 2005/0011407 and US 2006/0249049.

Alternatively, diluting agents or rejuvenating oils have been added as additives to the asphalt compositions comprising recycled bitumen to increase elasticity of said asphalt compositions and to allow the incorporation of higher amounts of recycled bitumen. For example, US 6.186.700 discloses asphalt compositions comprising recycled asphalt granules (obtained from recycled roof waste or recycled asphalt pavement), aggregate mineral material, a rejuventating oil and an emulsifier. US 2006/0215483 discloses asphalt compositions comprising recycled asphalt, virgin bitumen (penetration of 20 - 300, preferably 50 - 250, more preferably 75 - 200 $10^{-1}$ mm) and a terpenoid liquid as diluting agent. DE 102004055474 discloses an asphalt composition comprising aggregate material, virgin bitumen, recycled asphalt granules and a flux oil as a diluting agent.

EP A 810.276 discloses a method for recycling asphalt, wherein at least two fractions of used asphalt, each fraction having a different particle size, are heated separately and subsequently mixed with virgin bitumen.

US 6.159.279 discloses an asphalt-fines matrix comprising aggregate material, 1 - 70 wt.% of roadway millings and 2.5 - 6.0 wt.% of a hard bitumen having a penetration of 10 - 30 $cm^{-1}$. During the manufacture of the asphalt-fines matrix, it is said that it is not necessary to regenerate the aged bituminous binder in the roadway millings so that different types of millings can be recycled without the need to sort these types first. The aged binder bituminous binder content of the roadway millings is at least 3 wt.% in relation to the aggregates.

WO 2008/084014 discloses a rejuvenating agent having a viscosity of 200 - 6000 cSt (60°C) which comprises

10 - 90 wt.% palm oil and 10 - 90 wt.% bitumen, based on the total weight of the rejuvenating agent, and a process of recycling asphalt comprising the addition of the rejuvenating agent.

KR 100781608 B1 discloses compositions comprising recycled asphalt, elastomer and a petroleum resin.

The present inventors have found that the flexibility of the incorporation of recycled asphalt in asphalt compositions can be further improved, in particular in terms of hardness, brittleness, viscosity and fatigue resistance.

**Summary of the invention**

The present invention relates to a bituminous binder composition comprising:

(a) a recycled hard bitumen having a penetration according to NEN-EN 1426 (2007) at 25°C of 5 - 80 $10^{-1}$ mm; and
(b) an additive composition comprising a rejuveniling resin composition and an elastomer;

wherein:

the bituminous binder composition comprises an amount of the additive composition according to the formula:

wt.% additive composition $\leq$ 0.3 * wt.% recycled hard bitumen;

the total bitumen content of the bituminous binder composition comprises 70 - 100 wt.% of recycled hard bitumen and 0 - 30 wt.% selected from recycled aged bitumen, virgin bitumen or a mixture thereof, based on the total weight of the total bitumen content of the bituminous binder composition;

the bituminous binder composition comprises a total bitumen content of 70 - 99.9 wt.% and 0.1 - 30 wt.% of the additive composition, based on the total weight of the bituminous binder composition;

the weight ratio between the rejuveniling composition and the elastomer is between 50 : 50 and 99.9 : 0.1; and

the rejuveniling resin comprises a phenolic compound having at least one unsaturated side-chain, and oligomers and polymers including the phenolic compound, wherein the phenolic compound is characterised by the formula:

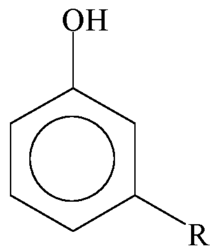

wherein R is $C_{15}H_{31-n}$ and wherein n = 0, 2, 4 or 6.

The present invention further relates to asphalt compositions, roofing coverings, bituminous membranes and bituminous fabrics comprising the bituminous binder compositions, to the use of the bituminous binder compositions in asphalt compositions, roofing coverings, bituminous membranes and bituminous fabrics and to the use of the bituminous binder compositions as a hot binder.

**Detailed description of the invention**

Definitions

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

In this document, the term "asphalt" is to be understood as a mixture comprising a bituminous binder composition and aggregate material (in the US often referred to as "asphalt concrete"). The term "bitumen" (in the US often referred to as "asphalt") is to be understood as a mixture of highly viscous, black organic compounds of which the major part are highly condensed polycyclic aromatic hydrocarbons. The bitumen may be naturally occurring bitumen, crude bitumen or the bitumen may be refined bitumen obtained as the bottom residue in the vacuum distillation process of crude oil, thermal cracking processes or hydrogen cracking processes. The CAS-number of bitumen is 8052-42-4. For the distinction between the terms "asphalt" and "bitumen", reference is further made to Kirk-Othmer, Encyclopedia of Chemical Technology, 4th Ed., Vol. 3, 689 - 724, 1992.

The term "aged bitumen" or "hardened bitumen" is used in this document to indicate bitumen in its form after extensive use in asphalt and which has been recycled. "Aged" or "hardened" bitumen is therefore distinct in properties such as penetration when compared with virgin or fresh bitumen as is explained above. In this document, the terms "aged bitumen" and "hardened bitumen" are interchangeably used.

In this document, the term "recycled hard bitumen" means the reuse of bitumen which are present in roofing coverings, bituminous membranes, bituminous fabrics or mixtures thereof. Although recycled hard bitumen and aged or hardened bitumen have properties in common, they originate from different sources. The reason for this is that virgin bitumen used in roofing applications, membranes and fabrics are often different from virgin bitumen in road applications.

The term "virgin bitumen" and the term "fresh bitumen" as used in this document mean bitumen in their virgin or fresh state, i.e. that they have not been used in applications such as asphalt, roofing coverings, bituminous membranes, bituminous fabrics or mixtures thereof and are in a state as bitumen which are directly delivered from the bitumen manufacturer or supplier.

Bituminous binder composition

The amount of recycled hard bitumen comprised by the bituminous binder composition is 70 - 100 wt.%, based on the total weight of the total bitumen content of the bituminous binder composition. The remaining 0 - 30 wt.% of the total bitumen content is either aged (or hardened) bitumen, preferably from recycled asphalt granulate, virgin bitumen, or a mixture of aged bitumen and virgin bitumen. The recycled hard bitumen preferably originates from roofing coverings, bituminous membranes, bituminous fabrics or mixtures thereof.

The recycled hard bitumen has preferably a penetration of 5 - 70 $10^{-1}$ mm, more preferably 5 - 60 $10^{-1}$ mm, yet even more preferably 10 - 60 $10^{-1}$ mm.

According to the present invention, the bituminous binder composition comprises an amount of the additive composition according to the formula:

$$\text{wt.\% additive composition} \leq 0.3 * \text{wt.\% recycled hard bitumen}$$

and preferably according to the formula:

$$\text{wt.\% additive composition} \leq 0.25 * \text{wt.\% recycled hard bitumen}$$

Hence, according to the invention, it is therefore preferred that the higher the recycled hard bitumen content, the higher the additive composition content.

According to the present invention, it is preferred that the recycled hard bitumen is a recycled roofing-grade bitumen, preferably obtained from roofing coverings, bituminous membranes, bituminous fabrics or mixtures thereof, which have been obtained from for example demolition, replacing or reconstruction operations, as well as cutting waste or failed production materials obtained in the production of roofing coverings, bituminous membranes and bituminous fabrics, wherein the roofing-grade bitumen is preferably a blown bitumen or a polymer modified bitumen, wherein the polymer is preferably a styrene-butadiene polymer or atactic polypropylene, most preferably atactic polypropylene. The styrene-butadiene polymer content is usually about 10 - 20 wt.%, based on the total weight of the polymer modified bitumen, and the atactic polypropylene is usually about 20 - 40 wt.%., based on the total weight of the polymer modified bitumen. The softening point of bitumen modified with atactic polypropylene is usually in the order of 155°C and the softening point of bitumen modified with a styrene-butadiene polymer is usually in the order of 115° - 120°C. It is well known in the art that roofing-grade bitumen are distinct from road-paving grade bitumen, the latter usually having a relatively lower penetration and a relatively lower softening point. Even more preferably, the recycled roofing grade bitumen are comprised by a granulate made from roofing coverings, bituminous membranes, bituminous fabrics or mixtures thereof which have been obtained from for example demolition, replacing or reconstruction operations, as well as made from cutting waste or failed production materials. This implies that this bitumen is not first recycled and isolated as such. However, as will be apparent to the skilled person in the art, the bitumen may first be recovered from this granulate and then used in the bituminous binder compositions according to the present invention. According to the present invention, it is preferred that the roofing-grade bitumen which has been used for the manufacture of the roofing coverings, bituminous membranes, bituminous fabrics and similar materials has a softening point (ASTM D-36, Ring-and-Ball) of 50° - 300°, more preferably 75° - 250° and in particular 85° - 200°C.

Where the term "polymer modified bitumen" is used herein, the "polymer" is to be understood as distinct from

the elastomer used in the additive composition which is a component of the bituminous binder compositions according to the present invention.

Most preferably, the recycled roofing grade bitumen are from a granulate made from roofing coverings. Such granulates usually consist of a support (e.g. glass or polyester woven or non-woven fabrics), bitumen, filling materials, sand and/or shale).

Blown bitumen is known in the art and are commonly manufactured by passing air or another oxygen containing gas over the bitumen. This results in an increase of the asphaltene content, an increase of the molecular weight and to the incorporation of ester functionalities which results in an increase in stiffness and softening point (Ring-and Ball). However, such blown bitumen are usually less compatible with modifying polymers and blends of blown bitumen and modifying polymers have a low storage stability. Nevertheless, methods are known in the art to provide stable blends of blown bitumen and elastomers. Hence, according to the present invention, the blown bitumen may comprise one or more elastomers.

Polymer modified bitumen is also known in the art and comprises bitumen modified with one or more elastomers. Polymer modification is usually employed to improve the ductility of the bitumen and to reduce the breaking point (°C) according to the FRAAS test (test 80/53 of the Institute of Petroleum). It provides an approximate indication of the temperature at which bitumen has no ductility and would reflect brittle fracture conditions. According to the invention, the breaking point of the polymer modified bitumen is preferably between 0 and -30°C, more preferably -5° to -25°C.

Since about 1940, the use of polymer modified bitumen in roofing coverings increased considerably at the expense of blown bitumen.

According to the present invention, the additive composition comprises a rejuveniling resin composition and an elastomer (which is distinct from the polymer used in polymer modified bitumen).

The rejuveniling resin composition comprises a rejuveniling resin which is preferably selected from the group consisting of natural rejuveniling resins, synthetic rejuveniling resins, and mixtures thereof. These rejuveniling resins comprise phenolic compounds having at least one unsaturated side-chain, and oligomers and polymers including such phenolic compounds. The major components of these phenolic compounds are generally characterised by the formula:

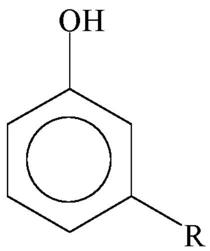

wherein R is $C_{15}H_{31-n}$ (n = 0, 2, 4 or 6) and are often referred to as "cardanol". Other phenolic components have a similar structure, wherein R is an optionally unsaturated $C_{13}$ or $C_{17}$ aliphatic, saturated or unsaturated chain. The oligomers and polymers may be formed during processing of vegetable oils, e.g. distillation where the oligomers and polymers are obtained as a residue, of may be synthetically formed from the monomeric phenolic compounds.

The rejuveniling resin is preferably derived from phenolic compounds having at least one unsaturated side-chain, and oligomers and polymers including such phenolic compounds components as present in unrefined Cashew Nut Shell Liquid (CNSL) and similar materials, most preferably CNSL. CNSL is a natural resin found in the honeycomb structure of the cashew nutshell. The oligomers and polymers may optionally be hydrogenated. Reference is made to e.g. US 2.523.623.

Most preferably, the rejuveniling resin is based on the residue of the distillation of unrefined CNSL. This residue majorly consists of oligomers and polymers of the phenolic components described above and has a viscosity (25°C) of about 1.000 - 30.000 $mPa.s^{-1}$, more preferably 1000 - 6000 $mPa.s^{-1}$ and most preferably 1100 - 3000 $mPa.s^{-1}$.

Suitable rejuveniling resins include Rheofalt EM and EMC which are commercialised by van Weezenbeek Specialties, Heerhugowaard, The Netherlands. The rejuveniling resin may be a blend of such resins and may further comprise an oil and/or a wax with a low softening point and a high penetration. It is preferred that the rejuveniling resin composition comprises 20 - 100 wt.% of a rejuveniling resin and 0 - 80 wt.% other components selected from oils, waxes and mixtures thereof, said other components comprising > 1.0 wt.% but less than 10 wt.% aromatic compounds, based on the total weight of the other components concerned. These weight ranges are based on the total weight of the rejuveniling resin composition. More preferably, the rejuveniling resin composition comprises 50 - 100 wt.% of a rejuveniling resin and 0 - 50 wt.% other components, even more preferably 75 - 100 wt.% of a rejuveniling resin and 0 - 25 wt.% other components. Most preferably, the rejuveniling resin composition consists essentially of the rejuveniling resin. Preferably, the rejuveniling resin composition lowers the viscosity of the bituminous binder compositions according to the present invention.

The amount of the additive composition in the bituminous binder composition is in the range of 0.1 - 30 wt.%, based on the total weight of the bituminous binder composition

Hence, the bituminous binder composition comprises a total bitumen content of 70 - 99.9 wt.% and 0.1 - 30 wt.% of the additive composition, preferably a total bitumen content of 70 - 90.5 wt.% and 0.5 - 30 wt.% of the additive composition. The amount of recycled hard bitumen comprised by the total bitumen content is 70 - 100 wt.% as described above.

The elastomer of the additive composition is preferably selected from the group consisting of ethylene-vinyl acetate copolymers, polybutadienes, ethylene-propylene copolymers, ethylene-propylene-diene terpolymers, butadiene-styrene diblock copolymers, styrene-butadiene-styrene (SBS) triblock terpolymers, isoprene-styrene diblock copolymers and styrene-isoprene-styrene (SIS) triblock terpolymers. In the bituminous binder composition according to the present invention, the elastomer content is preferably 0.1 to 15.0 wt. %, more preferably 0.1 to 5.0 wt. %, based on the total weight of the bituminous binder composition.

The weight ratio between the rejuveniling resin composition and the elastomer is between 50 : 50 and 99.9 : 0.1, preferably 50 : 50 and 99 : 1, and most preferably 50 : 50 and 90 : 10, based on the total weight of the additive composition.

Preferably, the bituminous binder composition according to the present invention further comprise, filler, mineral aggregate and optionally fibres and (woven or non-woven) fabrics, because the bitumen source for the bituminous binder composition is preferably a granulate made from roofing coverings, bituminous membranes, bituminous fabrics or mixtures thereof preferably obtained from roofing coverings, bituminous membranes, bituminous fabrics or mixtures thereof, as well as cutting waste or failed production materials. This granulate has preferably a mean diameter of 1 - 40 mm, more preferably 5 - 30 mm.

According to the present invention, the bituminous binder compositions show a viscoelastic behaviour. In rheological tests, a transition (inflection point in the Young modulus - temperature diagram) is observed from an elastic behaviour to a viscous behaviour. For a conventional virgin bitumen (penetration 40 - 60 $cm^{-1}$), this transition is observed around 10°C. According to the present invention, the bituminous binder composition preferably has this transition between 20° - 70°C, more preferably between 25° - 50°.

<u>Asphalt compositions</u>

The present invention also relates to the use of the bituminous binder composition according to the present invention, in asphalt compositions and asphalt-related compositions comprising aggregate material and the bituminous binder composition according to the invention.

According to a preferred embodiment, the asphalt composition comprises recycled asphalt, said recycled asphalt comprising 0.1 - 25 wt.% "aged" bitumen (wherein the term "aged" refers to the bitumen in its form after the extensive use of the asphalt), preferably 0.5 - 15 wt.%, more preferably 1 - 10 wt.%, based on the total weight of the recycled asphalt.

According to another preferred embodiment of the invention, the asphalt composition further comprises a variable weight ratio of aged bitumen as comprised by the recycled asphalt and the recycled hard bitumen as comprised by the bituminous binder composition, wherein this ratio varies between 99 : 1 to 1 : 99, based on the total weight of the bitumen content of the asphalt composition. More preferably, this weight ratio varies between 50 : 10 to 50 : 90 and most preferably between 25 : 10 to 75 : 90.

According to yet another preferred embodiment of the invention, the asphalt composition only comprises the recycled hard bitumen as comprised by the bituminous binder composition, i.e. that the recycled hard bitumen is the only bitumen source used in the asphalt composition. In such asphalt compositions, the bituminous binder composition according to the invention consists essentially of the recycled hard bitumen and the additive composition and is preferably used as a hot binder.

According to the invention, it is preferred that the asphalt composition comprises 0.1 - 15 wt.% bitumen, wherein the bitumen are selected from the group of virgin bitumen, recycled hard bitumen (preferably from roof covering granulate), aged bitumen (preferably from asphalt granulate) and mixtures thereof.

The total amount of the combination of aged bitumen (as comprised by the recycled asphalt) and recycled hard bitumen (as comprised by the bituminous binder composition) in the asphalt composition depends on the required total binder properties. However, this total amount is generally 0.1 - 25 wt.% total bitumen, based on the total weight of the asphalt composition, preferably 0.5 - 15 wt.%, more preferably 1 - 10 wt.%, based on the total weight of the asphalt composition.

According to the present invention, asphalt-related compositions include roofing covering compositions, bituminous membrane compositions and bituminous fabric compositions.

## Examples

Example 1

The following asphalt compositions were prepared: ZOAB = porous asphalt, STAB = asphalt concrete base course and asphalt concrete binder course, DAB = asphalt surface course, SMA = stone mastic asphalt. The bitumen content of the roof covering granulate was 5 wt.%. The rejuvenilin resin was Rheofalt EM and the elastomer was Kraton® D1118.The compositions are shown in Table 1.

Table 1

| Total bitumen content (wt.%) | Bitumen content recycled asphalt (wt.%) | Bitumen content roof covering granulate (wt.%) | Additive composition (wt.%)[a] | Asphalt type |
|---|---|---|---|---|
| 4.75 | 4.75 | 0.00 | 0.05 | STAB |
| 4.30 | 3.00 | 1.04 | 0.26 | STAB |
| 4.30 | 2.63 | 1.34 | 0.33 | STAB |
| 5.70 | 2.10 | 2.88 | 0.72 | DAB |
| 5.70 | 1.31 | 3.51 | 0.88 | DAB |
| 4.30 | 1.31 | 2.39 | 0.60 | STAB |
| 4.30 | 1.91 | 1.91 | 0.48 | STAB |
| 5.20 | 1.13 | 3.26 | 0.81 | ZOAB |
| 6.54 | 1.89 | 3.72 | 0.93 | SMA |
| 4.30 | 0.00 | 3.44 | 0.86 | ZOAB |
| 5.70 | 0.00 | 4.56 | 1.14 | DAB |
| 6.54 | 0.00 | 5.23 | 1.31 | SMA |
| 5.70 | 0.00 | 4.56 | 1.14 | ZOAB |
| 4.30 | 1.13 | 2.54 | 0.63 | ZOAB |
| [a] Weight ratio rejuveniling resin composition and elastomer is 1 : 1. | | | | |

Penetration measurements according to NEN-EN 1426 (or its equivalent ASTM D5) may officially only be performed on virgin or fresh bitumen. The properties of the asphalt compositions were therefore established in a test in which the penetration in the composition as such was determined, wherein a similar asphalt composition based on a 40/60 bitumen (virgin; penetration according to NEN-EN 1426 (2007) at 25°C of 40 $10^{-1}$ mm to 60 $10^{-1}$ mm) was used as a reference. This test (NEN-EN 12697-34-2004) is normally used for testing mastic asphalt and the stiffening effect of the filler materials is taken into account. The performance of the asphalt compositions according to Table 1 was on a par with the performance of the reference based on a 40/60 bitumen.

Example 2

The following mixtures of roof covering granulate, recycled asphalt granulate and additive composition (weight ratio rejuveniling resin composition and elastomer is 1 : 1). The rejuveniling resin was Rheofalt EM and the elastomer was Kraton® D1118.The mixtures are shown in Table 2.

Table 2

| Mixture | Bitumen from roof covering granulate (wt.%) | Bitumen from recycled asphalt granulate (wt.%) | Weight ratio bitumen from roof covering granulate : bitumen from recycled asphalt granulate | Additive composition (wt.%) | Virgin bitumen (40/60[a]; wt. %) |
|---|---|---|---|---|---|
| 1 | 23.50 | 70.50 | 1 : 3 | 6 | 0 |
| 2 | 31.30 | 62.70 | 1 : 2 | 6 | 0 |

(continued)

| Mixture | Bitumen from roof covering granulate (wt.%) | Bitumen from recycled asphalt granulate (wt.%) | Weight ratio bitumen from roof covering granulate : bitumen from recycled asphalt granulate | Additive composition (wt.%) | Virgin bitumen (40/60[a]; wt. %) |
|---|---|---|---|---|---|
| 3 | 47.00 | 47.00 | 1 : 1 | 6 | 0 |
| 4 | 62.70 | 31.30 | 2 : 1 | 6 | 0 |
| 5 | 70.50 | 23.50 | 3 : 1 | 6 | 0 |
| 6 | 50.00 | 50.00 | 1 : 1 | 6 | 0 |
| 7 | 0 | 94.00 | N/A | 6 | 0 |
| 8 | 94.00 | 0 | N/A | 6 | 0 |
| 9 | 0 | 0 | N/A | 0 | 100 |
| 10 | 0 | 0 | N/A | 6 | 94 |
| [a] 40/60 means a penetration of 40 - 60 x $10^{-1}$ mm (25°C). | | | | | |

The viscoelasticity of the compositions of Table 2 were measured at a frequency of 1 Hz at variable temperature. The results are shown in Table 3 and Figures 1A and 1B. Figure 1A shows the data of samples 1, 5 and 10. Figure 1B shows the data of samples 7, 8 and 10.

From Figure 1A and Table 3, it appears that the inflection point for mixture 10 is around 10°C. The inflection point indicates the transition from elastic behaviour to viscous behaviour. The inflection points for mixtures 1 - 6 are around 50° - 75°C. The inflection points for mixtures 7 and 8 are around 135° - 145°C (cf. Figure 1B). This example demonstrates that the compositions are more sensible to deformation at higher temperatures.

Table 3

| | G* (Pa) - Elastic | | | | | | | | |
|---|---|---|---|---|---|---|---|---|---|
| Sample | T (°C) | -25 | 0 | 25 | 50 | 75 | 100 | 125 | 150 |
| 1 | | 8800 | 8000 | 7800 | 5300 | 4000 | 4000 | 4000 | 4000 |
| 2 | | 8800 | 8000 | 7800 | 5300 | 4200 | 2900 | 2900 | 2900 |
| 3 | | 8800 | 8000 | 6800 | 5500 | 4500 | 3300 | 2500 | 2500 |
| 4 | | 8500 | 7800 | 6700 | 5500 | 4700 | 3700 | 2800 | 2800 |
| 5 | | 8800 | 7800 | 6800 | 5800 | 4800 | 4000 | 3000 | 3000 |
| 6 | | 8600 | 7800 | 6800 | 5600 | 4200 | 3200 | 2800 | 2800 |
| 7 | | 6500 | 6400 | 6300 | 5800 | 5500 | 4600 | 3800 | 3400 |
| 8 | | 8500 | 7700 | 6700 | 5800 | 5000 | 4400 | 3700 | 3700 |
| 10 | | 8800 | 7800 | 5600 | 3200 | 3200 | 3200 | 3200 | 3200 |
| Sample | T (°C) | G* (Pa) - Viscous | | | | | | | |
| 1 | | 7900 | 7600 | 6700 | 5200 | 4300 | 3100 | 3100 | 3100 |
| 2 | | 7900 | 7600 | 6700 | 6300 | 4200 | 3300 | 3300 | 3300 |
| 3 | | 7900 | 7600 | 6700 | 5500 | 4600 | 3800 | 2800 | 2800 |
| 4 | | 7700 | 7300 | 6400 | 5500 | 4600 | 3800 | 3000 | 3000 |
| 5 | | 7900 | 7500 | 6700 | 5700 | 4800 | 4000 | 3300 | 3300 |
| 6 | | 7800 | 7500 | 6600 | 5600 | 4700 | 3700 | 2800 | 2800 |
| 7 | | 5900 | 6000 | 5900 | 5500 | 4800 | 4400 | 3600 | 3600 |
| 8 | | 7800 | 7200 | 6400 | 5600 | 4800 | 4200 | 3500 | 3500 |
| 10 | | 7700 | 7600 | 6000 | 4000 | 4000 | 4000 | 4000 | 4000 |

Example 3

The following mixtures were studied by dynamic shear rheology and by dynamic viscosity measurements. These mixtures correspond to mixing ratios which can be selected for asphalt mixtures containing roof covering granulate and asphalt granulate. The mixtures are shown in Table 4.

Table 4

| Sample No. | DBA[a] (wt.%) | AG[b] (wt.%) | Resin[c] (wt.%) | Virgin bitumen[d] (wt.%) |
|---|---|---|---|---|
| 1 | 20 | 75 | 5 | 0 |
| 2 | 40 | 50 | 10 | 0 |
| 3 | 60 | 25 | 15 | 0 |
| 4 | 80 | 0 | 20 | 0 |
| 5 | 100 | 0 | 0 | 0 |
| 6 | 50 | 50 | 0 | 0 |
| 7 | 0 | 0 | 0 | 100 |

[a] DBA: bitumen from roof covering granulate which contains about 23 wt.% hardened bitumen [b] AG: bitumen from asphalt granulate which contains about 4.8 wt.% hardened bitumen. [c] Rheovalt EM. [d] Virgin bitumen was 40/60 bitumen.

The results of the dynamic shear measurements are shown in Table 5 and Figure 2.

Table 5

| **Sample** | **1** | **2** | **3** | **4** | **5** | **6** | **7** |
|---|---|---|---|---|---|---|---|
| **Log freq. (rad/s)** | **Log (G*)** | **Log (G*)** | **Log (G*)** | **Log (G*)** | **Log (G*)** | **Log (G*)** | **Log (G*)** |
| -4 | -0,35 | -0,30 | -0,18 | 0,29 | 4,47 | 2,24 | ND |
| -3 | 0,53 | 0,58 | 0,76 | 1,29 | 4,88 | 2,47 | ND |
| -2 | 1,53 | 1,64 | 1,82 | 2,11 | 5,23 | 2,94 | 0,59 |
| -1 | 2,58 | 2,59 | 2,65 | 2,88 | 5,59 | 3,59 | 1,59 |
| 0 | 3,41 | 3,44 | 3,35 | 3,59 | 5,88 | 4,18 | 2,59 |
| 1 | 4,32 | 4,23 | 4,08 | 4,14 | 6,18 | 4,85 | 3,59 |
| 2 | 5,00 | 4,94 | 4,76 | 4,68 | 6,47 | 5,44 | 4,53 |
| 3 | 5,65 | 5,53 | 5,32 | 5,15 | 6,76 | 5,97 | 5,38 |
| 4 | 6,18 | 6,00 | 5,79 | 5,62 | 7,09 | 6,56 | 6,12 |
| 5 | 6,76 | 6,59 | 6,29 | 6,09 | 7,44 | 7,12 | 6,76 |
| 6 | ND | ND | ND | ND | 7,75 | 7,56 | 7,41 |

Figure 2 shows in particular the following:

- the Young modulus G* of samples 1 - 4 is lower than that of sample 6 which is presumably due to the addition of the rejuveniling resin.
- The Young modulus G* of samples 1 - 4 is similar which indicates that compositions can be made over a wide range of mixing ratios.
- At high frequencies (i.e. at low temperatures), the G* modulus of samples 1 - 4 is lower than the G* modulus of sample 7 which indicates that samples 1 - 4 have an improved fatigue resistance.
- At low frequencies (i.e. at high temperatures), the G* modulus of samples 1 - 4 is higher than the G* modulus of sample 7 which indicates that samples 1 - 4 have an improved resistance against deformation and tracking.

The results of the dynamic viscosity measurements are shown in Figure 3. Figure 3 shows in particular the

following:

- The viscosities of samples 1 - 4 are lower than the viscosity of sample 5 but higher than the viscosity of 70/100 bitumen (70/100 means a penetration of 70 - 100 x $10^{-1}$ mm (25°C)).

This indicates that for producing asphalt mixtures from roof covering granulates, asphalt granulates, rejuveniling resin and elastomer, a production temperature will be necessary that is about 30°C higher than usual (about 170°C).

Example 4

Asphalt compositions based on the standard mixture for asphalt concrete 0/8) having high bitumen content (VK2; this standard mixture must contain 6.8 wt.% bitumen) were subjected to the Marshall test.

Composition 1 contained 40/60 bitumen (virgin; penetration according to NEN-EN 1426 (2007) at 25°C of 40 $10^{-1}$ mm to 60 $10^{-1}$ mm). Composition 2 contained bitumen from recycled roof covering granulate and 20 wt.% of the additive composition according to the invention (weight ratio rejuveniling resin composition and elastomer is 1 : 1; the rejuveniling resin was Rheofalt EM and the elastomer was Kraton® D1118). Composition 3 contained the same amount of bitumen as composition 2, provided that the bitumen have been added in the form of roof covering granulate. The Marshall test is an European standard (NEN-EN 12697-34-2004; Bituminous mixtures - Test method for hot mix asphalt - Part 23: Determination of the indirect tensile strength of bituminous specimens) and specifies a test method for determining the stability, flow and the Marshall Quotient values of specimens of bituminous mixtures mixed.

The results of the Marshall test are as follows:

Table 6

| | Composition 1 | Composition 2 | Composition 3 |
|---|---|---|---|
| Marshall stability (N) | 7370 | 7710 | 8320 |
| Marshall Quotient (N/mm) | 1391 | 1402 | 1631 |
| Flow (mm) | 5.3 | 5.5 | 5.1 |

Compositions 1 and 3 were also tested for tensile strength (kPa) and penetration ($10^{-1}$ mm). The results are shown in Table 7.

Table 7

| | Composition 1 | Composition 3 |
|---|---|---|
| Tensile strength (0°C) | 415 | 290 |
| Tensile strength (22°C) | 204 | 102 |
| Tensile strength (60°C) | 14 | 13 |
| Penetration (22°C) | 1.6 | 2.67 |

Example 5

In the Netherlands, recycled asphalt granulate comprises about 4.8 wt.% hardened bitumen and recycled roofing covering granulate comprises about 23 wt.% hardened bitumen. For manufacturing an asphalt sublayer, about 4.5 wt.% bitumen is necessary.

Therefore, a mixture was prepared from about 80 wt.% recycled asphalt granulate (which provides about 3.8 wt.% hardened bitumen), about 4 wt.% roofing covering granulate (which provides about 0.9 wt.% hardened bitumen) and 15 wt.% of the rejuveniling resin Rheofalt EM. No additional elastomer was added.

The mixture complied with the requirements according to NEN-EN 13108-20 with respect to stiffness, endurance, deformation and water sensitivity). The test according to NEN-EN 13108-02 is currently used to test virgin bitumen.

## Claims

**1.** A bituminous binder composition comprising:

(a) a recycled hard bitumen having a penetration according to NEN-EN 1426 (2007) at 25°C of 5 - 80 $10^{-1}$ mm; and
(b) an additive composition comprising a rejuveniling resin composition and an elastomer;

wherein:

the bituminous binder composition comprises an amount of the additive composition according to the formula:

wt.% additive composition ≤ 0.3 * wt.% recycled hard bitumen;

the total bitumen content of the bituminous binder composition comprises 70 - 100 wt.% of recycled hard bitumen and 0 - 30 wt.% selected from recycled aged bitumen, virgin bitumen or a mixture thereof, based on the total weight of the total bitumen content of the bituminous binder composition;
the bituminous binder composition comprises a total bitumen content of 70 - 99.9 wt.% and 0.1 - 30 wt.% of the additive composition, based on the total weight of the bituminous binder composition;
the weight ratio between the rejuveniling composition and the elastomer is between 50 : 50 and 99.9 : 0.1; and the rejuveniling resin comprises a phenolic compound having at least one unsaturated side-chain, and oligomers and polymers including the phenolic compound, wherein the phenolic compound is **characterised by** the formula:

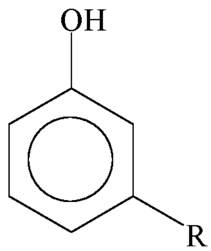

wherein R is $C_{15}H_{31-n}$ and wherein n = 0, 2, 4 or 6.

2. The bituminous binder composition according to Claim 1, wherein the rejuveniling resin composition comprises 20 - 100 wt.% of the rejuveniling resin and 0 - 80 wt.% of components selected from oils, waxes and mixtures thereof, based on the total weight of the rejuveniling resin composition.

3. The bituminous binder composition according to Claim 1 or Claim 2, wherein the recycled hard bitumen is a roofing-grade bitumen.

4. The bituminous binder composition according to Claim 3, wherein the roofing-grade bitumen is a blown bitumen or a polymer modified bitumen.

5. The bituminous binder composition according to any one of Claims 1 - 4, wherein the recycled hard bitumen is obtained from roofing coverings, bituminous membranes, bituminous fabrics or mixtures thereof, as well as cutting waste or failed production materials obtained in the production of roofing coverings, bituminous membranes and bituminous fabrics.

6. The bituminous binder composition according to any one of Claims 1 - 5, wherein the elastomer content in the bituminous binder composition is 0.1 to 15.0 wt. %, based on the total weight of the bituminous binder composition.

7. The bituminous binder composition according to any one of claims 1 - 6, wherein the bituminous binder composition has an inflection point in the Young modulus - temperature diagram between 20° - 70°C.

8. Use of a bituminous binder composition according to any one of Claims 1 - 7 in asphalt compositions, roofing coverings, bituminous membranes and bituminous fabrics.

9. Use of a bituminous binder composition according to any one of Claims 1 - 7 as a hot binder.

10. An asphalt composition, a roofing covering, a bituminous membrane or a bituminous fabric comprising the bituminous binder composition according to any one of Claims 1 - 7.

11. The asphalt composition according to Claim 10, wherein the asphalt composition comprises 0.1 - 15 wt.% bitumen, wherein the bitumen are selected from the group consisting of recycled hard bitumen, recycled asphalt granulate, virgin bitumen, and mixtures thereof.

12. The asphalt composition according to Claim 11, wherein the recycled hard bitumen is a roofing-grade bitumen.

13. The asphalt composition according to Claim 12, wherein the roofing-grade bitumen is a blown bitumen or a polymer modified bitumen.

14. The asphalt composition according to any one of Claims 10 - 13, wherein the bituminous binder composition consists essentially of the recycled hard bitumen and the additive composition as defined in any one of Claims 1 - 7.

**Patentansprüche**

1. Bitumenhaltige Binderzusammensetzung, die Folgendes aufweist:

   (a) ein recyceltes Hartbitumen mit einer Einbringung nach NEN-EN 1426 (2007) bei 25 °C von 5 - $80^{-1}$mm; und
   (b) eine Additivzusammensetzung, die eine Verjüngungs- bzw. Aufbereitungsharzzusammensetzung und ein Elastomer aufweist;

   wobei
   die bitumenhaltige Binderzusammensetzung eine Menge der Additivzusammensetzung gemäß folgender Formel umfasst:

   Gewicht-% Additivzusammensetzung $\leq$ 0,3 * Gewicht-% recyceltes Hartbitumen;
   der Gesamtbitumengehalt der bitumenhaltigen Binderzusammensetzung 70 - 100 Gewicht-% recyceltes Hartbitumen und 0 - 30 Gewicht-% ausgewählt aus recyceltem gealtertem Bitumen, frischem Bitumen oder einer Mischung davon aufweist, und zwar basierend auf dem Gesamtgewicht des Gesamtbitumengehaltes der bitumenhaltigen Binderzusammensetzung;
   die bitumenhaltige Binderzusammensetzung einen Gesamtbitumengehalt von 70 - 99,9 Gewicht-% und 0,1 - 30 Gewicht-% der Additivzusammensetzung aufweist, und zwar basierend auf dem Gesamtgewicht der bitumenhaltigen Binderzusammensetzung;
   das Gewichtsverhältnis zwischen der Verjüngungs- bzw. Aufbereitungszusammensetzung und dem Elastomer zwischen 50:50 und 99,9:0,1 ist; und
   das Verjüngungs- bzw. Aufbereitungsharz eine Phenolverbindung aufweist, die mindestens eine ungesättigte Seitenkette hat, und Oligomere und Polymere, welche die Phenolverbindung einschließen, wobei die Phenolverbindung **gekennzeichnet ist durch** folgende Formel:

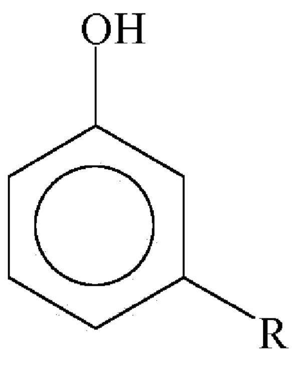

   wobei R gleich $C_{15}H_{31-n}$ ist, und wobei gilt n = 0, 2, 4, 6.

2. Bitumenhaltige Binderzusammensetzung nach Anspruch 1, wobei die Verjüngungs- bzw. Aufbereitungsharzzusammensetzung 20 - 100 Gewicht-% des Verjüngungsharzes und 0 - 80 Gewicht-% von Komponenten aufweist, die aus Ölen, Wachsen und Mischungen davon ausgewählt sind, und zwar basierend auf dem Gesamtgewicht der Verjüngungsharzzusammensetzung.

**3.** Bitumenhaltige Binderzusammensetzung nach Anspruch 1 oder Anspruch 2, wobei das recycelte Hartbitumen Bitumen der Güteklasse für Dachdeckung ist.

**4.** Bitumenhaltige Binderzusammensetzung nach Anspruch 3, wobei das Bitumen der Güteklasse für Dachdeckung geblasenes Bitumen oder ein polymermodifiziertes Bitumen ist.

**5.** Bitumenhaltige Binderzusammensetzung nach einem der Ansprüche 1 - 4, wobei das recycelte Hartbitumen aus Dachdeckungen, Bitumenmatten, Bitumengeweben oder Mischungen davon erhalten wird, genauso wie aus Schneidabfall oder Produktionsabfallmaterialien, die bei der Produktion von Dackdeckungen, Bitumenmatten und Bitumengeweben erhalten werden.

**6.** Bitumenhaltige Binderzusammensetzung nach einem der Ansprüche 1 - 5, wobei der Elastomergehalt in der bitumenhaltigen Binderzusammensetzung 0,1 - 15,0 Gewicht-% basierend auf dem Gesamtgewicht der bitumenhaltigen Binderzusammensetzung ist.

**7.** Bitumenhaltige Binderzusammensetzung nach einem der Ansprüche 1 - 6, wobei die bitumenhaltige Binderzusammensetzung einen Wendepunkt im E-Modul-Temperatur-Diagramm zwischen 20° - 70°C hat.

**8.** Verwendung einer bitumenhaltigen Binderzusammensetzung nach einem der Ansprüche 1 - 7 in Asphaltzusammensetzungen, Dachdeckungen, Bitumenmatten und Bitumengeweben.

**9.** Verwendung einer bitumenhaltigen Binderzusammensetzung nach einem der Ansprüche 1 - 7 als ein Heißbindemittel.

**10.** Asphaltzusammensetzung, Dachdeckung, Bitumenmatte oder Bitumengewebe, welches die bitumenhaltige Binderzusammensetzung nach einem der Ansprüche 1 - 7 aufweist.

**11.** Asphaltzusammensetzung nach Anspruch 10, wobei die Asphaltzusammensetzung 0,1 - 15 Gewicht-% Bitumen ausweist, wobei das Bitumen aus der Gruppe ausgewählt ist, welches aus recyceltem Hartbitumen, recyceltem Asphaltgranulat, frischem Bitumen und Mischungen davon besteht.

**12.** Asphaltzusammensetzung nach Anspruch 11, wobei das recycelte Hartbitumen ein Bitumen der Güteklasse für Dachdeckung ist.

**13.** Asphaltzusammensetzung nach Anspruch 12, wobei das Bitumen der Güteklasse für Dachdeckung geblasenes Bitumen oder ein polymermodifiziertes Bitumen ist.

**14.** Asphaltzusammensetzung nach einem der Ansprüche 10 - 13, wobei die bitumenhaltige Binderzusammensetzung im Wesentlichen aus recyceltem Hartbitumen und der Additivzusammensetzung besteht, wie in einem der Ansprüche 1 - 7 definiert.

## Revendications

**1.** Une composition de liant bitumineux comprenant:

(a) un bitume dur recyclé ayant une pénétration selon la norme NEN-EN 1426 (2007) à 25°C de 5 à 80 $10^{-1}$ mm ; et
(b) une composition additive comprenant une composition de résine de rajeunissement et un élastomère ;

dans laquelle :

- la composition de liant bitumineux comprend une proportion de la composition additive satisfaisant à la formule :

% en poids de composition additive $\leq$ 0,3 % * en poids de bitume dur recyclé

- la teneur de bitume totale de la composition de liant bitumineux comprend de 70 à 100% en poids de bitume dur recyclé et de 0 à 30% en poids d'un produit sélectionné parmi le bitume âgé recyclé, le bitume vierge ou leurs mélanges, exprimés sur la base du poids total de la teneur totale en bitume de la composition de liant

bitumineux;
- la composition de liant bitumineux comprend une teneur totale en bitume de 70 à 99,9% et de 0,1 à 30% en poids de la composition additive, exprimés sur la base du poids total de la composition de liant bitumineux ;
- le rapport pondéral résine de rajeunissement/élastomère est compris entre 50/50 et 99,9/0,1 ; et
- la résine de rajeunissement comprend un composé phénolique présentant au moins une chaine latérale insaturée et des oligomères et des polymères incluant le composé phénolique, lequel composé phénolique est **caractérisé par** la formule :

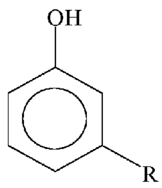

dans laquelle R est $C_{15}H_{31-n}$ et où n = 0, 2, 4 ou 6.

**2.** La composition de liant bitumineux selon la revendication 1, dans laquelle la composition de résine de rajeunissement comprend de 20 à 100% en poids de résine de rajeunissement et de 0 à 80% en poids de composants choisis dans le groupe comprenant les huiles, les cires et leurs mélanges, exprimés sur la base du poids total de la composition de résine de rajeunissement.

**3.** La composition de liant bitumineux selon la revendication 1 ou la revendication 2, dans laquelle le bitume dur recyclé est un bitume pour toitures.

**4.** La composition de liant bitumineux selon la revendication 3, dans laquelle le bitume pour toitures est un bitume soufflé ou un bitume modifié par un polymère.

**5.** La composition de liant bitumineux selon l'une quelconque des revendications 1 à 4, dans laquelle le bitume dur recyclé est obtenu à partir de couvertures de toiture, de membranes bitumineuses, de tissus bitumineux ou de mélanges de ceux-ci, ainsi que de déchets de coupe ou de matériels de production ratés, obtenus dans la production de couvertures de toitures, de membranes bitumineuses et de tissus bitumineux.

**6.** La composition de liant bitumineux selon l'une quelconque des revendications 1 à 5, dans laquelle la teneur en élastomère dans la composition de liant bitumineux est de 0,1 à 15,0% en poids exprimés sur la base du poids total de la composition de liant bitumineux.

**7.** La composition de liant bitumineux selon l'une quelconque des revendications 1 à 6, dans laquelle la composition de liant bitumineux présente un point d'inflexion, dans le diagramme du module d'Young en fonction de la température, compris entre 20° et 70°C.

**8.** Utilisation d'une composition de liant bitumineux selon l'une quelconque des revendications 1 à 7, dans des compositions d'asphalte, des couvertures de toiture, des membranes bitumineuses et des tissus bitumineux.

**9.** Utilisation d'une composition de liant bitumineux selon l'une quelconque des revendications 1 à 7, comme liant à chaud.

**10.** Une composition d'asphalte, une couverture de toiture, une membrane bitumineuse ou un tissu bitumineux comprenant la composition de liant bitumineux selon l'une quelconque des revendications 1 à 7.

**11.** La composition d'asphalte selon la revendication 10, laquelle composition d'asphalte comprend de 0,1 à 15% en poids de bitume, dans laquelle les bitumes sont choisis dans le groupe comprenant le bitume dur recyclé, les granulats d'asphalte recyclé, le bitume vierge et de leurs mélanges.

**12.** La composition d'asphalte selon la revendication 11, dans laquelle le bitume dur recyclé est un bitume pour toitures.

**13.** La composition d'asphalte selon la revendication 12, dans laquelle le bitume pour toitures est un bitume soufflé ou un bitume modifié par un polymère.

**14.** La composition d'asphalte selon l'une quelconque des revendications 10 à 13, dans laquelle la composition de liant bitumineux est constituée essentiellement de bitume dur recyclé et de la composition additive telle que définie dans l'une quelconque des revendications 1 à 7.

Fig 1a

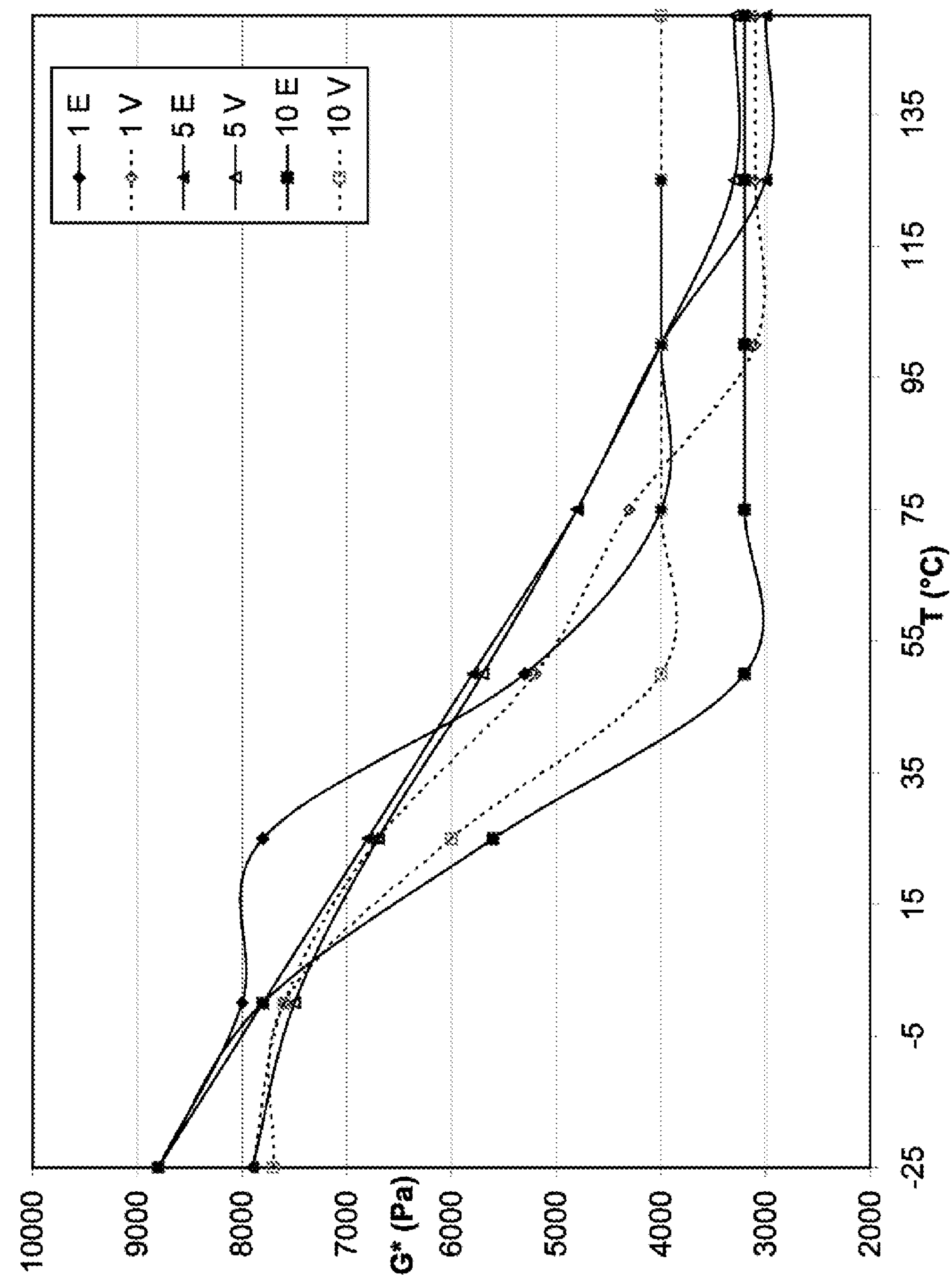
G* (Pa)
10000
9000
8000
7000
6000
5000
4000
3000
2000
T (°C)
-25
-5
15
35
55
75
95
115
135
1 E
1 V
5 E
5 V
10 E
10 V

Fig 1b

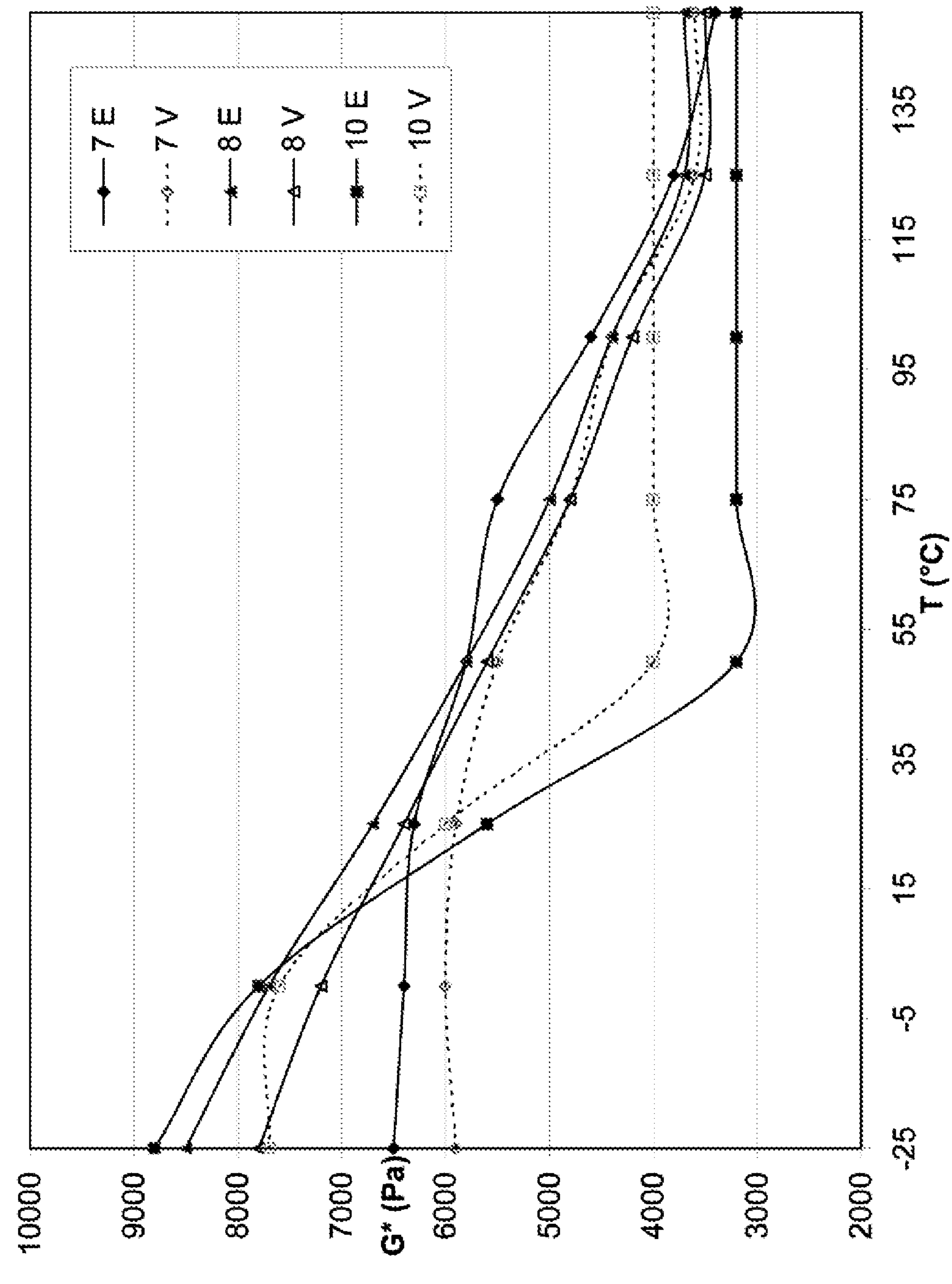
G* (Pa)
10000
9000
8000
7000
6000
5000
4000
3000
2000
T (°C)
-25
-5
15
35
55
75
95
115
135
7 E
7 V
8 E
8 V
10 E
10 V

Fig 2

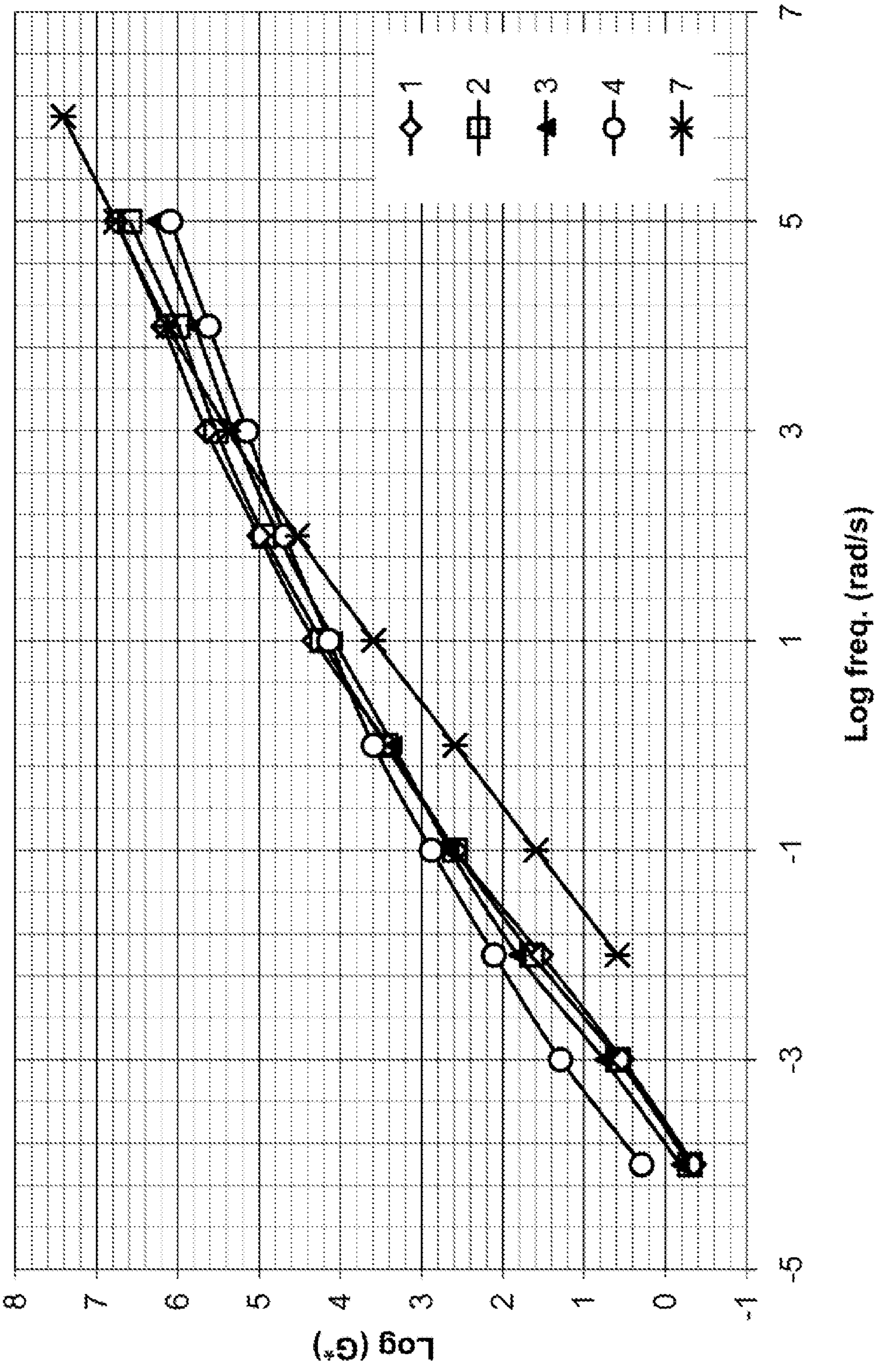

Fig 3

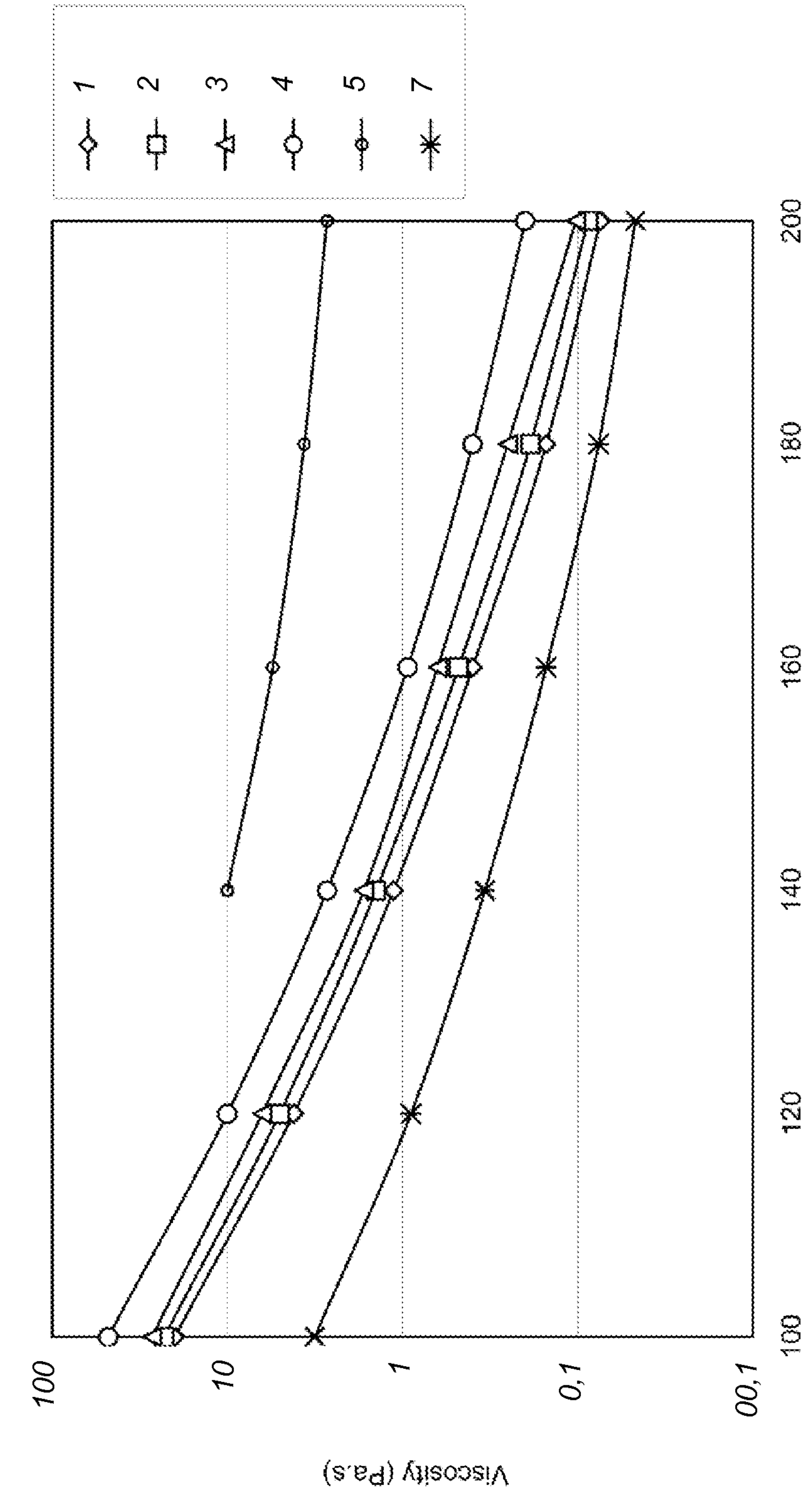

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5217530 A
- US 5340391 A
- US 5436285 A
- US 20050011407 A
- US 20060249049 A
- US 6186700 B
- US 20060215483 A
- DE 102004055474
- EP 810276 A
- US 6159279 A
- WO 2008084014 A
- KR 100781608 B1
- US 2523623 A


### Non-patent literature cited in the description


- **KIRK-OTHMER.** Encyclopedia of Chemical Technology. 1992, vol. 3, 689-724